# NEW EUROPEAN PATENT SPECIFICATION

(11) **EP 1 941 999 B2**
(45) Date of publication and mention of the opposition decision: **26.02.2014**
(45) Mention of the grant of the patent: 14.04.2010
(21) Application number: 06256529.6
(22) Date of filing: 21.12.2006
(51) Int. Cl.: B32B 27/32

(54) **FILM**
FILM
FILM

(43) Date of publication of application: 09.07.2008
(73) Proprietor: Borealis Technology Oy, 06101 Porvoo (FI)
(72) Inventor: Daviknes, Hans Georg, 3960 Stathelle (NO); Myhre, Ole Jan, 3941 Porsgrunn (NO)
(74) Representative: Campbell, Neil Boyd

(56) References cited:
- EP-A1- 1 488 924
- WO-A-99/64509
- WO-A-03/064519
- US-A- 4 677 007
- US-A1- 2005 200 046
- 'MDO Film Orientated PE and PP packaging film' BOREALI A/S no. IN0128, 2004,
- YUN, XIAO BING DECLARATION 19 May 2010, SHANGHAI,
- MYHRE, OLE JAN ET AL: 'Expanding Opportunities with Borstar PE' ORIENTED PE FILMS 2001, pages 1 - 10
- 'Maack Specialty Films Conference 2001' 12 May 2010,
- MYHRE, OLE JAN ET AL: 'Expanding Opportunities with Borstar PE' ORIENTED PE FILMS 01 October 2001, pages 1 - 20
- BONGARTZ, HERBERT DECLARATION no. D2C, 16 February 2012, HORGEN,
- 'Acrylate copolymers' DUPONT ELVALOY 1224 AC 09 January 2002,
- 'Acrylate copolymers' DUPONT ELVALOY 1225 AC 01 July 2001,

## Description

This invention relates to a thin film with excellent mechanical properties that can be formed into bags or sacks for packaging. In particular the invention concerns a multilayer film that is uniaxially oriented in the machine direction (MD), and especially to a laminated multilayer film that is uniaxially oriented in MD. Even at final thicknesses of less than 140 µm, the films of the invention exhibit excellent mechanical properties such as impact strength. The invention further relates to a film laminate for preparing a laminated multilayer film that is uniaxially oriented in the MD, as well as to a preparation method of said uniaxially oriented in MD multilayer film, particularly laminated film.

### Background art

Polymers are widely used in the manufacture of packaging for a great variety of materials. One typical application area is bags and sacks for the packaging of relatively lightweight material (e.g. up to 5 kg loads per bag).

Polymers are also used in the manufacture of packaging for higher material loads, e.g. bags and sacks for material weights up to 25 kg or even 50 kg. Such heavyweight applications place high demands for the packaging usable therefor, in particular good mechanical properties are required. Examples of high weight applications include heavy duty sacks, e.g. heavy duty shipping sacks (HDSS), and bags for the packaging materials such as powders (e.g. cement mix), polymer beads, natural materials (e.g. compost, stones and sand) and waste materials.

Throughout the world, millions of tons of materials are transported and stored in sacks and bags, usually on pallets. Pallets enable moving and storing large volumes of materials and one pallet can be stacked on top of another. The resulting loads on at least some of the bags containing the materials is, however, extremely high, typically more than 1000 kg for larger, heavy duty sacks. It is crucial for the overall stability of the pallet, however, that none of the sacks deform or tear.

Sacks and bags for use in packaging, transportation and storage therefore need good mechanical properties, such as puncture resistance and certain tear resistance properties, with the exact demand depending on the end application area. Nevertheless, bags and sacks, especially heavy duty shipping sacks, have tended to be made of thick films to provide good mechanical properties.

Low density polyethylene (LDPE), linear low density polyethylene (LLDPE) or blends thereof are often used in packaging articles.

It is also known that to make polyethylene films having acceptable tensile strength for use in packaging, the film can be uniaxially stretched. At the same time, however, other mechanical properties, such as tear resistance in MD are typically compromised.

EP-A-0146270 to C-I-L Inc, discloses a heavy duty shipping bag having walls formed of cross-laminated uniaxially oriented polyethylene (which may be high density, low density or linear low density polyethylene) and inner walls of low density polyethylene (LDPE) to provide the film with the necessary mechanical properties including tear resistance to facilitate heat sealing. The disclosed multilayer films are, however, still relatively thick, see, for instance, the examples which describe films having thicknesses of around 165 µm (2 layer film) and 240 mm (3 layer film).

EP-A-0184362, also to C-I-L Inc discloses a number of different films for the manufacture of sacks and bags including a laminated multilayer film comprising two layers of uniaxially oriented linear low density polyethylene (LLDPE) as outer layers and interposed therein are two layers of non-oriented LDPE. The layers of LDPE are present to prevent heat seal strength from being weakened. Film thicknesses of e.g. 165 µm for a 2 layer film are described.

WO 03/064519 A1 discloses a process for making machine direction oriented polyethylene film.

At present, heavy duty shipping sacks generally have a thickness of, for example, 120-200 µm depending on the weight of material they are intended to contain. Reducing film thickness is, however, highly desirable due to material and thus cost savings.

There remains therefore a continuous need for alternative films suitable for making bags and sacks, and especially heavy duty shipping sacks, with an appropriate balance of mechanical properties depending on the desired end application area. There is particularly a need fot further film materials with an excellent impact strength at lower film thicknesses.

### Description of invention

### Multilayer film of invention

The present inventors have now found that a uniaxially oriented film which comprises a certain combination of linear low density polyethylenes (LLDPEs) and a polymer component, preferably an ethylene copolymer, having a Tm of 100 °C or less provide advantageous mechanical properties, namely at least an excellent impact resistance at film thicknesses considerably lower than the film thicknesses used in the prior art for such applications. Moreover, said mechanical properties are similar or even improved compared to those of thicker prior art films presently used in the packaging field.

Furthermore, the film of the invention has preferably a desirable balance between said impact resistance and one or both of the mechanical properties selected from tear resistance (determined in machine direction, MD) and creep resistance (determined in machine direction, MD). The property balance between impact resistance and one or both of said tear resistance and/or creep resistance can be optimised and adapted within the concept of the invention depending on the needs for the desired end application.

Thus the present invention provides thinner films with similar or even improved mechanical properties compared to prior art films for a wide variety of packaging applications.

In one preferable embodiment of the invention the uniaxially oriented in MD multilayer film has an advantageous property balance between the impact resistance and the tear resistance (in MD) at decreased film thicknesses. The film of this embodiment is highly suitable for packaging material of loads up to 5 kg, e.g. 2-5 kg. The creep resistance is often less critical in such lighter weight applications and can be optimised within the concept of the invention for the desired end use.

In another preferable embodiment the uniaxially oriented in MD multilayer film has an advantageous property balance between the impact resistance and creep resistance, as expressed in the machine direction at 23N load and at 23 °C temperature, at decreased film thicknesses. The film of this embodiment is highly beneficial for heavy duty packaging materials, e.g. loads up to 50 kg. Good tear resistance is also beneficial in such higher load applications, thus preferably the film of this embodiment has highly desirable balance between said impact, creep and tear properties and can be further optimised according to the intended end application. The highly demanding film applications include sacks and bags, e.g. heavy duty shipping sacks, HDSS, possessing the requisite mechanical properties, particularly possessing excellent impact strength as expressed with dart drop impact resistance.

Thus in a first aspect the invention is directed to a uniaxially oriented multilayer film comprising layers in the following order:
(i) a first outer layer (A), comprising a mixture of multimodal znLLDPE and mLLDPE, which mLLDPE is a unimodal or multimodal mLLDPE,
(ii) a second outer layer (B) comprising a multimodal linear low density polyethylene (LLDPE); and
(iii) a first inner layer (C) comprising at least one polymer component which has a Tm ≤ 100 °C;
(iv) a second inner layer (C);
(v) a third outer layer (B); and
(vi) a fourth outer layer (A) comprising a mixture of multimodal znLLDPE and mLLDPE, which mLLDPE is a unimodal or multimodal mLLDPE;
   wherein said multilayer film is in the form of a stretched film which is uniaxially oriented in the machine direction (MD) in a draw ratio of at least 1:3; and
   wherein layers (B) (ii) and (B) (v) and/or layers (C) (iii) and (C) (iv) comprise the same or different polymer composition(s).

In a preferred embodiment the invention provides a laminated multilayer film (abbreviated herein as laminated film) which comprises
(i) a first outer layer (A) comprising a mixture of multimodal znLLDPE and mLLDPE, which mLLDPE is a unimodal or multimodal mLLDPE,
(ii) a second outer layer (B) comprising a multimodal linear low density polyethylene (LLDPE); and
(iii) a first inner layer (C) comprising at least one polymer component which has a Tm ≤ 100 °C; in the form of a coextruded multilayer film as a multilayer film laminate (a); and
(iv) a second inner layer (C);
(v) a third outer layer (B); and
(vi) a fourth outer layer (A) comprising a mixture of multimodal znLLDPE and mLLDPE, which mLLDPE is a unimodal or multimodal mLLDPE;
   in the form of a coextruded multilayer film as a substrate (b);
   wherein said first inner layer (C) of said film laminate (a) is in contact with the second inner layer (C) of the substrate (b) and said coextruded laminate (a) and coextruded multilayer substrate (b) are laminated together and wherein said laminated multilayer film is uniaxially oriented in the machine direction (MD) in a draw ratio of at least 1:3.

Herein the term "layer (C) (ii) comprises at least one polymer component which has a Tm ≤ 100 °C" means herein that the layer (C) as defined above or below in any of the embodiments may comprise one or more polymer components, whereby at least one polymer component starts to melt at said temperature at least 100 °C or below.

The term "multilayer film is in the form of a stretched film which is uniaxially oriented in the machine direction (MD)" means that the film is oriented, i.e. stretched, uniaxially to at least 3 times its original length in the machine direction during its manufacture, before the use thereof in the desired end application, preferably as a packaging material (e.g. before the preparation of the packaging article, such as a bag or sack). Also preferably, the film is oriented only uniaxially in MD. Thus the film of the invention preferably excludes films oriented biaxially in MD and in TD, i.e. transverse direction.

The terms "extruded", or respectively, "coextruded" and "coextrudate", as used herein mean well known film (co)extrusion, preferably blown film (co)extrusion, processes and the product thereof.

The term "laminated multilayer film" or "laminated film" is well known in the art and means that said prior formed multilayer coextruded film laminate, is contacted with a surface of a substrate (b) and adhered thereon by any lamination techniques in a manner well known in the art, for example, but not limited to, by heat lamination at a temperature above the melting temperature of one or more of the polymer components of layer (C) (ii), whereby at least partly molten layer (C) (ii) adheres on the substrate (b).

The film laminate (a) can be laminated on the substrate (b) prior to, or preferably, during the stretching to provide orientation in MD. Thus both the laminate (a) and the substrate (b) are stretched, i.e. oriented, while in contact with each other.

Preferably, the substrate (b) is a multilayer film, wherein the film layer(s) comprise one or more polymer components and optionally additives that are conventionally used in the field of polymeric films. More preferably, said substrate (b) comprises at least: (iv) an inner layer (C) comprising at least one polymer component which has a Tm ≤ 100 °C, and,
(iv) an outer layer (B).

Said layers (C) are adjacent. These layers may comprise the same or different polymer composition and said layers (B) may comprise the same or different polymer composition. Preferably, at least the polymer composition of layers (C) are the same. In such a case, when forming the laminated film structure by heat lamination, the at least partly molten layers (C) are fused together, whereby the laminated layers (C) form together the innermost, i.e. core, layer of the laminated and uniaxially (MD) stretched film of the invention.

Particularly preferably both the film laminate (a) and the substrate (b) are multilayer films with the same layer structure and polymer composition, more preferably, both have the same coextruded multilayer film structure and polymer composition.

Viewed from yet another aspect, the invention provides use of a film as described above or below in packaging e.g. for preparing a packaging article, e.g. a sack or bag.

Viewed from a still further aspect, the invention provides an article, preferably a packaging article, such as sack or bag comprising a film as herein before or hereinafter described.

The films of the invention comprise layers, in the following order:
(i) a first outer layer (A),
(ii) a second outer layer (B),
(iii) a first inner layer (C),
(iv) a second inner layer (C),
(v) a third outer layer (B) and
(vi) a fourth outer layer (A)

This order is referred to herein as ABCCBA. The film may be non-laminated or, preferably, a laminated film as defined above. Such laminated film comprises, preferably consists of, said film laminate (a) comprising, preferably consisting of, layer (A) (i), layer (B) (ii) and layer (C) (iii); and said substrate (b) comprising, preferably consisting of layer (C) (iv), layer (B) (v) and layer (A) (vi). Layers (C) (iii) and (C) (iv) form the innermost layers of the film.

Layers (A) (i) and (A) (vi) may comprise the same or different, preferably the same, polymer composition; layers (B) (ii) and (B) (v) may comprise the same or different, preferably the same, polymer composition; and, respectively, layers (C) (iii) and (C) (iv) may comprise the same or different, preferably the same polymer composition. It is preferred that at least the layers (C) (iii) and (C) (iv) have the same polymer composition, whereby they form together the core/innermost layers of the laminated multilayer film. When this is the case the layers may be non-distinguishable in the final film. Such films may therefore be considered to comprise of five layers.

Invention includes also films, wherein layer A (i) and layer B (ii) have the same polymer composition and/or layer B (v) and layer (A) (vi) have the same polymer composition (BBCCBB).

The film is suitable both for light and heavy weight packaging applications. ABCCBA films are particularly suitable as packaging material for heavy duty applications, e.g. for loadings up to 25 kg or even up to 50 kg, such as for heavy duty shipping sacks (HDSS) or form fill and seal (FFS) sacks. The film provides heavy duty packaging material which meets the demanding mechanical requirements with decreased film thicknesses.

### Film preparation process

Viewed from a further aspect, the invention is directed to a process for the preparation of a laminated multilayer film as claimed in claim 2 to 10 comprising:
- coextruding a composition so as to form a coextrudate film laminate (a) having:
   (i) a first outer layer (A) comprising a mixture of multimodal znLLDPE and mLLDPE, which mLLDPE is a unimodal or multimodal mLLDPE;
   (ii) a second outer layer (B) comprising a multimodal linear low density polyethylene (LLDPE); and
   (iii) a first inner layer (C) comprising at least one polymer component which has a Tm ≤ 100 °C;
- coextruding a composition so as to form a coextrudate substrate (b) (CBA) having:
   (iv) a second inner layer (C);
   (v) a third outer layer (B); and
   (vi) a fourth outer layer (A) comprising a mixture of multimodal znLLDPE and mLLDPE, which mLLDPE is a unimodal or multimodal mLLDPE;
- contacting said coextrudate film laminate ABC (a) on the surface of said coextrudate substrate (CBA) (b) in that layer order,
- laminating said ABCCBA structure together; and
- stretching the laminated film uniaxially in machine direction (MD) in a draw ratio of at least 1:3.

The lamination of film laminate (a) and substrate (b) can occur prior to or during the stretching step. Lamination and stretching processes are known in the film field. Lamination is preferably effected by heat.
A preferred preparation method of the laminated ABCCBA film of the invention preferably comprises
- coextruding a composition so as to form a coextrudate film laminate (a), ABC, as defined above,
- coextruding a composition so as to form a coextrudate substrate (b), CBA, as defined above,
- contacting said coextrudate film laminate ABC (a) on the surface of said coextrudate substrate CBA (b), in that layer order,
- laminating said ABCCBA structure together, preferably by heat laminating at a temperature of 100 °C or more, and
- stretching the laminated film uniaxially in machine direction (MD) in a draw ratio of at least 1:3.

Preferably, the lamination step is effected during the stretching/orientation step.

The laminated film embodiments of the invention provide a feasible way to utilise (co)extrusion techniques for producing heavy duty packaging material which require before the stretching step a film material with original/starting film thickness higher than thicknesses conventionally producible in commercial (co)extrusion, e.g. blown coextrusion, film lines.

The layer structures as defined herein above and below are layers directly contacting the adjacent layer(s), in the given order and without any adhesive layer or preferably without surface treatment applied.

Preferably, the film is a laminated film oriented in a machine direction (MD) in a draw ratio of 1:3 to 1:10.

A further advantage of the film of the invention is the good processability of the polymer materials. The LLDPE combination of the invention enables for example high production rates and decreased film thicknesses.

### Film layers

The below given definitions of polymer compositions, structures and preparation processes of "layer (B)", "layer (C)" and "layer (A)" apply herein generally to layers identified with (B), (C) and (A) in any film structure of the invention, e.g. in laminate (a) and substrate (b) of a laminated film.

Moreover, the definitions given for suitable polymer compositions, e.g. for LLDPE, znLLDPE, mLLDPE, LDPE and ethylene acrylate copolymer, in relation to an individual layer (B), (C) or (A) naturally apply and are generalisable to said polymer compositions when present in another layer(s), unless otherwise stated.

The term "multimodal" used for any polymer composition of the invention, e.g. for linear low density polyethylene composition, referred below as LLDPE, means, if otherwise not specified, multimodalty with respect to molecular weight distribution and includes also bimodal polymer.

Usually, a polyethylene, e.g. LLDPE composition, comprising at least two polyethylene fractions, which have been produced under different polymerisation conditions resulting in different (weight average) molecular weights and molecular weight distributions for the fractions, is referred to as "multimodal". The prefix "multi" relates to the number of different polymer fractions present in the polymer. Thus, for example, a polymer consisting of two fractions only is called "bimodal". The form of the molecular weight distribution curve, i.e. the appearance of the graph of the polymer weight fraction as a function of its molecular weight, of a multimodal polymer, e.g. LLDPE, will show two or more maxima or at least be distinctly broadened in comparison with the curves for the individual fractions. For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

In any multimodal polymer, e.g. LLDPE, there is by definition a lower molecular weight component (LMW) and a higher molecular weight component (HMW). The LMW component has a lower molecular weight than the higher molecular weight component. Preferably, in a multimodal polymer, e.g. LLDPE, of use in this invention at least one of the LMW and HMW components is a copolymer of ethylene. Further preferably, at least HMW component is an ethylene copolymer. Further preferably, also the lower molecular weight (LMW) component may be an ethylene copolymer. Alternatively, if one of the components is a homopolymer, then LMW is the preferably the homopolymer.

The term "ethylene copolymer" is again used in this context to encompass polymers comprising repeat units deriving from ethylene and at least one other C₃₋₁₂ alpha olefin monomer. Preferred copolymers are binary and comprise a single comonomer or are terpolymers and comprise two or three comonomers. In any copolymeric HMW component, at least 0.25 mol-%, preferably at least 0.5 mol-%, e.g. at least 1-mol%, such as up to 10 mol-% of repeat units derive from the comonomer. Ethylene preferably forms the majority of the HMW component.

The term "consisting of " used below in relation to film layer materials is meant to exclude only the presence of other polyolefin components, preferably other polymers. Thus said term includes the presence of additives, e.g. conventional film additives, i.e. each layer independently may contain conventional film additives such as antioxidants, UV stabilisers, colour masterbatches, acid scavengers, nucleating agents, anti-blocking agents, slip agents etc as well as polymer processing agent (PPA).

The general properties of polymer (or film) as given below were determined according to determination methods and using the samples as described below under "**Determination methods**"

### Layer (B)

Layer (B) comprises a multimodal linear low density polyethylene composition, LLDPE, e.g. bimodal LLDPE.

Still more preferably layer (B) comprises a multimodal LLDPE produced by Ziegler Natta catalyst. Herein such polymers are referred to as znLLDPEs. As already mentioned above, layer (B) of the film laminate (a) and layer (B) of the substrate (b) may comprise same or different LLDPE composition.

The preferred LLDPE composition is defined below further with preferable properties. The given preferable property ranges are applicable to LLDPE compositions in general and apply herein particularly to a multimodal and unimodal LLDPE, particularly to a multimodal znLLDPE and to a uni- or multimodal mLLDPE, unless otherwise stated below.

The LLDPE in layer (B) of the invention may have a density of no more than 940 kg/m³, e.g. 905-940 kg/m³. For multimodal znLLDPE in particular, the density is preferably more than 915 kg/m³. In certain end applications multimodal znLLDPE has preferably density of 915 to 935 kg/m³.

The melt flow rate, MFR₂, of the LLDPE is preferably in the range 0.01 to 20 g/10min, e.g. 0.05 to 10g/10min, preferably 0.1 to 6.0 g/10min. For multimodal znLLDPE's in particular, MFR₂ is preferably in the range of 0.1 to 5 g/10min.

The MFR₂₁ of the LLDPE may be in the range 5 to 500, preferably 10 to 200 g/10min. The Mw of the LLDPE, preferably of znLLDPE, may be in the range 100,000 to 300,000, preferably 150,000 to 270,000. The Mw/Mn of the LLDPE may be in the range 10 to 30, preferably the Mw/Mn of a multimodal znLLDPE is 10 to 25.

A LLDPE composition, preferably a multimodal znLLDPE, may be formed from ethylene along with at least one C₃₋₁₂ alpha-olefin comonomer, e.g. 1-butene, 1-hexene or 1-octene. Preferably, the LLDPE, preferably a multimodal znLLDPE, is a binary copolymer, i.e. the polymer contains ethylene and one comonomer, or a terpolymer, i.e. the polymer contains ethylene and two or three comonomers. Preferably, the LLDPE, preferably a multimodal znLLDPE, comprises an ethylene hexene copolymer, ethylene octene copolymer or ethylene butene copolymer. The amount of comonomer present in the LLDPE, preferably in a multimodal znLLDPE, is preferably 0.5 to 12 mol%, e.g. 2 to 10% mole relative to ethylene, especially 4 to 8% mole. Alternatively, comonomer contents present in the LLDPE, preferably multimodal znLLDPE, may be 1.5 to 10 wt%, especially 2 to 8 wt% relative to ethylene.

As stated above a multimodal LLDPE comprises at least a LMW component and a HMW component.

The LMW component of LLDPE preferably has a MFR₂ of at least 50, preferably 50 to 3000 g/10 min, more preferably at least 100 g/10 min. In case of znLLDPE the preferred range of MFR₂ of the LMW component is e.g. 110 to 500 g/10 min. The molecular weight of the low molecular weight component should preferably range from 20,000 to 50,000, e.g. 25,000 to 40,000.

The density of the lower molecular weight component may range from 930 to 980 kg/m³, e.g. 940 to 970 kg/m³, more preferably 945 to 955 kg/m³ in the case of copolymer and 940 to 975 kg/m³, especially 960 to 972 kg/m³ in the case of homopolymer.

The lower molecular weight component has preferably form 30 to 70 wt%, e.g. 40 to 60% by weight of the multimodal LLDPE with the higher molecular weight component forming 70 to 30 wt%, e.g. 40 to 60% by weight.

The higher molecular weight component has a lower MFR₂ and a lower density than the lower molecular weight component.

The higher molecular weight component has preferably an MFR₂ of less than 1 g/10 min, preferably less than 0.5 g/10 min, especially less than 0.2 g/10min, and a density of less than 915 kg/m³, e.g. less than 910 kg/m³, preferably less than 905 kg/m³. The Mw of the higher molecular weight component may range from 100,000 to 1,000,000, preferably 250,000 to 500,000.

Alternatively, the multimodal LLDPE may comprise other polymer components, e.g. up to 10 % by weight of a well known polyethylene prepolymer (obtainable from a prepolymerisation step as well known in the art). In case of such prepolymer, the prepolymer component is comprised in one of LMW and HMW components, preferably LMW component, as defined above.

Layer (B) preferably comprises at least 30 wt% of multimodal LLDPE polymer, preferably at least 40 %wt, more preferably at least 60 %wt, e.g. at least 80 %wt LLDPE. The multimodal LLDPE used in layer (B) is preferably a multimodal znLLDPE as defined above.

Layer (B) may comprise other polymer components, such as another LLDPE having the density 940 kg/m³ or less, a non LLDPE polymer component(s) such as high density polyethylene (HDPE), medium density polyethylene (MDPE), both produced in a low pressure polymerisation, or LDPE produced in a high pressure polymerisation process, such as LDPE homopolymer or LDPE copolymer, e.g. an ethylene acrylate copolymer as described in detail below. If present, such polymers preferably do not contribute more than 60 %wt of layer (B), preferably 40 % wt or less. The layer (B) is preferably free of other polyolefins, such as LDPE, more preferably free of LDPE homopolymer, .

In a preferred embodiment of the film of the invention, layer (B) consists of LLDPE polymer(s). Layer (B) comprises preferably at least multimodal znLLDPE and optionally another znLLDPE and/or mLLDPE. Suitable mLLDPEs are described in relation to layer (A). More preferably, layer (B) consists of multimodal znLLDPE.

### Layer (C)

Layer (C) of the invention preferably comprises at least one ethylene copolymer component having a melting point (Tm) of 100 °C or less, e.g. a melting point of 80 to 95 °C. As already mentioned above, layer (C) of the film laminate (a) and layer (C) of the substrate (b) may comprise same or different ethylene copolymer having a melting point (Tm) of 100 °C or less.

Such polymers include copolymers of ethylene and at least one comonomer selected from vinyl acetate, an acrylate and a C₃₋₁₂ alpha-olefin comonomer, e.g. 1-butene, 1-hexene or 1-octene, e.g. LLDPE composition

In preferred films of the invention, layer (C) comprises at least one ethylene acrylate copolymer. Such a polymer is formed from an ethylene monomer and an acrylate monomer (and other further comonomers if desired). Preferably, layer (C) comprises an ethylene alkyl acrylate polymer (e.g. an ethylene C₁₋₁₀ alkyl acrylate polymer). Preferred ethylene alkyl acrylate polymers are ethylene methyl acrylate (EMA), ethylene ethyl acrylate and ethylene butyl acrylate, especially EMA. The acrylate content of the ethylene acrylate copolymer may be in the range 1 to 40 wt%, preferably 2 to 30 wt%, more preferably 3 to 28 %, especially 5 to 25 wt%. The ethylene acrylate copolymers are very well known and commercially available (e.g. from DuPont) or produced according to or analogously to the polymerisation methods descried in the literature for the preparation of ethylene acrylate copolymers, preferably in a high pressure polymerisation using organic peroxides in a manner well known in the art.

The ethylene acrylate copolymer preferably forms at least 50 %wt of layer (C), preferably at least 70 %wt, more preferably at least 80 %wt, especially at least 90 %wt of layer (C). Layer (C) may comprise other polymer components and if present, such polymers should not contribute more than 30 %wt of layer (C), preferably 20 %wt or less of layer (C).

In a highly preferred embodiment, layer (C) consists of ethylene acrylate copolymer(s). Most preferably layer (C) consists of EMA.

The density of the ethylene acrylate copolymer may be in the range 905-960 kg/m³, preferably in the range of from 920 to 950 kg/m³, such as 930 to 945 kg/m³,

The MFR₂ of ethylene acrylate copolymers of use in the (C) layer should preferably be in the range 0.01 to 20 g/10min, e.g. 0.05 to 10, preferably 0.1 to 5.0, e.g. 0.2 to 4.0 g/10min.

The Vicat softening temperatures of the ethylene acrylate copolymer may be in the range 30 to 80°C. The melting point (Tm) of the ethylene acrylate copolymer may be in the range 80 to 100 °C.

Preferably, layer (C) is free of LDPE, more preferably LDPE homopolymer produced in a high pressure process.

### Layer (A)

Layer (A) preferably comprises a mixture of multimodal at least one LLDPE. Still more znLLDPE and a linear low density polyethylene polymer produced using a single site catalyst, e.g. metallocene. Herein the LLDPE produced by single site catalyst, preferably metallocene, is called mLLDPE.

As used herein, the mLLDPE polymer is an ethylene copolymer having a density of 940 kg/m³ or less. Preferred mLLDPE's may have a density of 905-940 kg/m³, more preferably 910 to 937 kg/m³, e.g. 935 kg/m³ or below. In one preferable embodiment even densities of 925 kg/m³ or below are highly feasible.

The mLLDPE is formed from ethylene along with at least one C₃₋₂₀ alpha-olefin comonomer, preferably C₃₋₁₂ alpha-olefin comonomer, e.g. 1-butene, 1-hexene or 1-octene. Preferably, the mLLDPE is a binary copolymer, i.e. the polymer contains ethylene and one comonomer, or a terpolymer, i.e. the polymer contains ethylene and two or three, preferably two, comonomers. Preferably, the mLLDPE comprises an ethylene hexene copolymer, ethylene octene copolymer, ethylene butene copolymer or a terpolymer of ethylene with 1-butene and 1-hexene comonomers. The amount of comonomer present in the mLLDPE is preferably 0.5 to 12 mol%, e.g. 2 to 10% mole, especially 4 to 8% mole. Alternatively viewed comonomer contents present in the mLLDPE may be 1.5 to 10 wt%, especially 2 to 8 wt%.

The MFR₂ of mLLDPE's of use in a layer (A) is preferably in the 0.01 or more, preferably 0.1 to 20 g/10min, e.g. 0.2 to 10, preferably 0.5 to 6.0, e.g. 0.7 to 4.0 g/10min. Depending on the end use also as low MFR₂ as 2.5 g/10 min or below may be preferred.

The mLLDPE has preferably a weight average molecular weight (Mw) of 100,000-250,000, e.g. 110,000-160,000.

The mLLDPE may be unimodal or multimodal, both are preferable. By unimodal is meant that the molecular weight profile of the polymer comprises a single peak and is produced by one reactor and one catalyst.

The unimodal mLLDPE polymers preferably posses a narrow molecular weight distribution. The Mw/Mn value is preferably 2 to 10, e.g. 2.2 to 4.

Multimodal mLLDPE comprises at least LMW component and HMW component and properties as defined above generally for LLDPE and multimodal znLLDPE in relation Layer (B) above. For mLLDPE the preferred ranges of MFR₂ of the LMW component can be both e.g. 50 to 500 g/10 min and 100 to 400 g/10 min.

Both the LMW and HMW components of multimodal mLLDPE are preferably copolymers of ethylene as defined above. In one preferred embodiment the mLLDPE, preferably the multimodal mLLDPE, is a terpolymer, preferably a terpolymer of 1-butene and 1-hexene.

The molecular weight distribution, Mw/Mn, of a multimodal mLLDPE may be e.g. below 30, preferably between 3-10.

Preferred znLLDPE present in layer (A) is as described above in relation to layer (B).

Layer (A) may comprise other polymers as well. Typically, layer (A) comprises at least 50 %wt, preferably at least 80 %wt, of LLDPE polymer(s), and more preferably consists of LLDPE polymer(s). The layer (A) is preferably free of other polyolefins, such as LDPE, more preferably free of LDPE homopolymer.

In one embodiment layer (A) consists of a mixture of znLLDPE and mLLDPE, wherein mLLDPE is preferably a unimodal or multimodal mLLDPE. The znLLDPE in said mixture is a multimodal znLLDPE. In said embodiment layer (A) preferably comprises up to 60 %wt mLLDPE, preferably 10-50 %wt or less mLLDPE, more preferably 15-50 %wt mLLDPE, and at least 40 %wt znLLDPE, preferably 50-90 %wt znLLDPE, more preferably 50-85 wt% znLLDPE.

### Preparation of polymer

The polymer compositions, e.g. LLDPE, LDPE, ethylene acrylate copolymers etc., suitable as layer materials of the films of the invention can be any conventional, e.g. commercially available, polymer compositions. Alternatively, suitable polymer compositions can be produced in a known manner according to or analogously to conventional polymerisation processes described in the literature of polymer chemistry.

Unimodal polyethylene, e.g. LLDPE, is preferably prepared using a single stage polymerisation, e.g. slurry or gas phase polymerisation, preferably a slurry polymerisation in slurry tank or, more preferably, in loop reactor in a manner well known in the art. As an example, a unimodal LLDPE can be produced e.g. in a single stage loop polymerisation process according to the principles given below for the polymerisation of low molecular weight fraction in a loop reactor of a multistage process, naturally with the exception that the process conditions (e.g. hydrogen and comonomer feed) are adjusted to provide the properties of the final unimodal polymer.

Multimodal (e.g. bimodal) polymers can be made by mechanical blending two or more, separately prepared polymer components or, preferably, by in-situ blending in a multistage polymerisation process during the preparation process of the polymer components. Both mechanical and in-situ blending is well known in the field.

Accordingly, preferred multimodal polymers, e.g. LLDPE polymers, are prepared by in-situ blending in a multistage, i.e. two or more stage, polymerization or by the use of two or more different polymerization catalysts, including multi- or dual site catalysts, in a one stage polymerization.

Preferably the multimodal polymer, e.g. LLDPE, is produced in at least two-stage polymerization using the same catalyst, e.g. a single site or Ziegler-Natta catalyst. Thus, for example two slurry reactors or two gas phase reactors, or any combinations thereof, in any order can be employed. Preferably however, the multimodal polymer, e.g. LLDPE, is made using a slurry polymerization in a loop reactor followed by a gas phase polymerization in a gas phase reactor.

A loop reactor - gas phase reactor system is marketed by Borealis as a BORSTAR reactor system. Any multimodal polymer, e.g. LLDPE, present in layers is thus preferably formed in a two stage process comprising a first slurry loop polymerisation followed by gas phase polymerisation.

The conditions used in such a process are well known. For slurry reactors, the reaction temperature will generally be in the range 60 to 110°C (e.g. 85-110°C), the reactor pressure will generally be in the range 5 to 80 bar (e.g. 50-65 bar), and the residence time will generally be in the range 0.3 to 5 hours (e.g. 0.5 to 2 hours). The diluent used will generally be an aliphatic hydrocarbon having a boiling point in the range -70 to +100°C. In such reactors, polymerization may if desired be effected under supercritical conditions. Slurry polymerisation may also be carried out in bulk where the reaction medium is formed from the monomer being polymerised.

For gas phase reactors, the reaction temperature used will generally be in the range 60 to 115°C (e.g. 70 to 110°C), the reactor pressure will generally be in the range 10 to 25 bar, and the residence time will generally be 1 to 8 hours. The gas used will commonly be a non-reactive gas such as nitrogen or low boiling point hydrocarbons such as propane together with monomer (e.g. ethylene).

Preferably, the lower molecular weight polymer fraction is produced in a continuously operating loop reactor where ethylene is polymerised in the presence of a polymerization catalyst as stated above and a chain transfer agent such as hydrogen. The diluent is typically an inert aliphatic hydrocarbon, preferably isobutane or propane.

The higher molecular weight component can then be formed in a gas phase reactor using the same catalyst.

Where the higher molecular weight component is made second in a multistage polymerisation it is not possible to measure its properties directly. However, the skilled man is able to determine the density, MFR₂ etc of the higher molecular weight component using Kim McAuley's equations. Thus, both density and MFR₂ can be found using K. K. McAuley and J. F. McGregor: On-line Inference of Polymer Properties in an Industrial Polyethylene Reactor, AIChE Journal, June 1991, Vol. 37, No, 6, pages 825-835.

The density is calculated from McAuley's equation 37, where final density and density after the first reactor is known.

MFR₂ is calculated from McAuley's equation 25, where final MFR₂ and MFR₂ after the first reactor is calculated. The use of these equations to calculate polymer properties in multimodal polymers is common place.

The multimodal polymer, e.g. LLDPE, may be made using any conventional catalyst, such as a chromium, single site catalysts, including metallocenes and non-metallocenes as well known in the field, or Ziegler-Natta catalysts as is also known in the art. The preferred are any conventional Ziegler Natta and single site catalysts and the choice of an individual catalyst used to make znLLDPE or mLLDPE, respectively, is not critical.

In case of mLLDPE, metallocene catalysis is preferably used. The preparation of the metallocene catalyst can be carried out according or analogously to the methods known from the literature and is within skills of a person skilled in the field. Thus for the preparation see e.g. EP-A-129 368, WO-A-9856831, WO-A-0034341, EP-A-260 130, WO-A-9728170, WO-A-9846616, WO-A-9849208, WO-A-9912981, WO-A-9919335, WO-A-9856831, WO-A-00/34341, EP-A-423 101 and EP-A-537 130. WO2005/002744 describes a preferable catalyst and process for preparing the mLLDPE component.

In case of znLLDPE the polyethylene polymer composition is manufactured using Ziegler-Natta catalysis. Preferred Ziegler-Natta catalysts comprise a transition metal component and an activator. The transition metal component comprises a metal of Group 4 or 5 of the Periodic System (IUPAC) as an active metal. In addition, it may contain other metals or elements, like elements of Groups 2, 13 and 17. Preferably, the transition metal component is a solid. More preferably, it has been supported on a support material, such as inorganic oxide carrier or magnesium halide. Examples of such catalysts are given, among others in WO 95/35323, WO 01/55230, WO 2004/000933, EP 810235 and WO 99/51646.

In a very preferable embodiment of the invention the polyethylene composition is produced using a ZN catalysts disclosed in WO 2004/000933 or EP 688794.

Conventional cocatalysts, supports/carriers, electron donors etc can be used.

The films of the invention may incorporate one or more barrier layers as is known in the art. For certain applications for example, it may be necessary to incorporate a barrier layer, i.e. a layer which is impermeable to oxygen, into the film structure. This can be achieved using conventional lamination techniques or by coextrusion.

### Film preparation

For film formation using polymer mixtures the different polymer components (e.g. within layers (A), (B) and (C)) are typically intimately mixed prior to extrusion and blowing of the film as well known in the art. It is especially preferred to thoroughly blend the components, for example, using a twin screw extruder, preferably a counter-rotating extruder prior to extrusion and film blowing.

The preparation process of a uniaxially oriented in MD multilayer film of the invention comprises at least the steps of forming a layered film structure and stretching the obtained multilayer film in the machine direction in a draw ratio of at least 1:3.

As to the first step of the preparation process, the layered structure of the film of the invention may be prepared by any conventional film formation process including extrusion procedures, such as cast film or blown film extrusion, lamination processes or any combination thereof. Films are preferably produced by extrusion.

Particularly preferably at least the multilayer film of layers (B), (C) and (A) is formed by blown film extrusion, more preferably by blown film coextrusion processes as described above. Typically the compositions providing layers (B), (C) and (A) will be blown (co)extruded at a temperature in the range 160°C to 240°C, and cooled by blowing gas (generally air) at a temperature of 10 to 50°C to provide a frost line height of 1 or 2 to 8 times the diameter of the die. The blow up ratio should generally be in the range 1.2 to 6, preferably 1.5 to 4.

Preferred laminated film embodiments ABCCBA, additionally involve a lamination step before the stretching step. Thus the multilayer film obtained from the first step is used in the subsequent lamination step as a film laminate (a).

Preferably both the film laminate (a), and the substrate (b), have the same coextruded multilayer film structure, whereby said laminated film can advantageously be prepared first by coextruding compositions forming the layers (B), (C) and (A) through an annular die, blowing by blown extrusion into a tubular film to form a bubble. The formed bubble is then collapsed e.g. in nip rolls to form said laminate (a) and said substrate (b) which are contacted inside/inside, ABC/CBA, and laminated, preferably heat laminated. Lamination is preferably effected during the subsequent stretching step.

As to the stretching step, after forming the multilayer film, and, for laminated embodiments, after subjecting to a lamination step, the multilayer film is stretched in the machine direction. Stretching may be carried out by any conventional technique using any conventional stretching devices which are well known to those skilled in the art. Preferably, the film is stretched only in the MD. The effect of stretching in only one direction is to uniaxially orient the film.

In the case of laminated film embodiments it is preferred that the stretching step is effected after the surfaces of laminate (a) and substrate (b) have been put into contact with each other.

The film is stretched at least 3 times, preferably 3 to 10 times, its original length in the machine direction. This is stated herein as a draw ratio of at least 1:3, i.e. "1" represents the original length of the film and "3" denotes that it has been stretched to 3 times that original length. Preferred films of the invention are stretched in a draw ratio of at least 1:4, more preferably between 1:5 and 1:8, e.g. between 1:5 and 1:7. An effect of stretching (or drawing) is that the thickness of the film is similarly reduced. Thus a draw ratio of at least 1:3 preferably also means that the thickness of the film is at least three times less than the original thickness.

The film preparation process steps of the invention are known and may be carried out in one film line in a manner known in the art. In a preferred process for preparation of the laminated film, the film lamination is preferably effected by heat lamination, whereby the lamination step can occur during the stretching step. Still more preferably the lamination step is achieved in the same film preparation line as the stretching step and preferably occurs at the same time as stretching. Such film lines are commercially available.

The films obtained by the processes of the invention can be used for preparing packaging, such as sacks or bags, in a known manner. In a preferred embodiment the film is further processed to tubular films which are either used directly in conventional vertical or horizontal form-fill-seal machines as well known in the art or are made into tubular films by conventional tube making machines and used thereafter in packaging. This may be carried out in-line during film production or off-line by conventional techniques. The tubular film can then be fed to a form, fill and seal (FFS) machine for use in packaging.

The film, ABCCBA film, of the present invention is also ideally suited for the manufacture of heavy duty shipping sacks. Such sacks/bags may be made in different shapes and sizes and may be gusseted in a known manner.

Such bags and sacks are intended to contain materials up to 50 kg in weight (e.g. 5-50 kg in weight) and can be stacked on pallets. Different stacking arrangements are well known in the art.

### Film properties

In the laminated film of the invention, the substrate (b) may have the same thickness as the corresponding film laminate (a). Preferably layers (B) of said laminate (a) and said substrate (b), layers(C) of said laminate (a) and said substrate (b), and, if present, layers (A) of said laminate (a) and said substrate (b) have the same thickness. More preferably at least layers (C) of said laminate (a) and said substrate (b) have the same polymer composition. Preferably, also layer (B) of said laminate (a) and layer (B) of said substrate (b) have the same polymer composition.

Further preferably, the films consist of layers ABCCBA.

In ABCCBA laminated films, preferably layers (A) have equal thicknesses and together form 15 to 55 %, more preferably 20 to 45 %, of the total thickness of the ABCCBA film structure. Similarly, layers (B) preferably have equal thicknesses and together form 30 to 70 %, more preferably 35 to 60 %, of the total thickness of the ABCCBA film structure. Also layers (C) preferably have equal thicknesses and together form about 5 to 25 %, more preferably 10 to 20 %, of the total thickness of the ABCCBA film structure.

Accordingly, the thickness distribution for a laminated ABCCBA film 7.5-27.5%/15-35%/5-25%/15-35%/7.5-27.5%, wherein the total film thickness is 100% and the amount of core layer is the sum of two layers (C).

The total thickness of the film of the invention depends on the intended end use. The "final thickness" means the total thickness of the stretched multilayer film. The term "starting" or "original" thickness of a film means the total thickness of the film of the invention prior to stretching step.

Accordingly, in said non-laminated or laminated light weight applications the original thickness before stretching is 400 µm or less, preferably from 40 to 300 µm, more preferably from 50 to 300 µm, such as from 100 to 300 µm, even more preferably from 200 to 280 µm.

For heavy weight/heavy duty applications up to 50 kg, the original thickness of the film, preferably laminated film, before stretching is preferably 800 µm or less, preferably from 200 to 600 µm, more preferably from 300 to 600 µm.

The final films of the present invention after stretching typically have a thickness of 140 µm or less, preferably 20 to 120 µm.

More specifically films for use in light weight packaging applications up to e.g. 5 kg preferably have a final thickness of preferably 10 to 100 µm, more preferably 15 to 80 µm, still more preferably 20 to 50 µm, e.g. 25 to 40 µm.

Films comprising, preferably consisting of, ABCCBA structures for heavy weight/duty packaging applications up to e.g. 50 kg preferably have a final thickness of 40 to 135 µm, more preferably 50 to 120 µm, still more preferably 55 to 100 µm, e.g. 60 to 90 µm.

As an example of a laminated film of the invention, preferably for heavy weight/heavy duty applications, the film laminate (a) is a ABC coextrudate and the substrate (b) is a coextrudate CBA, preferably laminate (a) and substrate (b) have the same film layer structure and composition, are laminated together in the above layer order, each laminate (a) and substrate (b) having the thickness of 240 µm. Thus after lamination the starting (original) film thickness of the laminated film is 480 µm before stretching and after the stretching in draw ratio of e.g. 1:6, the final, i.e. total, film thickness of the uniaxially in MD oriented laminated film of the invention is 80 µm.

The film of the invention and the sacks and bags produced therefrom exhibit a remarkable combination of mechanical properties. For instance the present films for heavy weight/duty packaging applications provide excellent impact strength, and preferably excellent tear resistance in MD as well as creep resistance in MD whilst having a lesser thickness, i.e. thickness of 140 µm or less, preferably 100 µm or less, e.g. about 80 µm, compared to prior art films.

The general definitions for film properties provided below were determined separately both for film for use in light weight packaging applications with loads e.g. up to 5 kg and film for use in heavy weight/duty packaging applications with loads e.g. up to 50 kg using different film samples.

Film sample used for determining the film properties for use in said heavy weight/duty packaging applications was a uniaxially (MD) stretched ABCCBA film sample with original thickness of 480 µm before stretching, final film thickness of 80 µm after stretching and thickness distribution (%) of 20/22.5/7.5/7.5/22.5/20 of the total film thickness.

Film sample used for determining the film properties for use in said light weight packaging applications was a uniaxially (MD) stretched ABCCBA film sample with original thickness of 330 µm before stretching, final film thickness of 55 µm after stretching and thickness distribution (%) of 15/27.5/7.5/7.5/27.5/15 of the total film thickness. Both film samples were made according to method described below under "**Film Sample Preparation**", unless otherwise stated under the description of **"Determination methods".**

As mentioned above, the films of the present invention exhibit remarkable impact resistance, i.e. impact strength expressed herein as relative impact strength as determined according to the method described under "Determination methods" below. The relative impact resistance of preferred films for use in light weight applications e.g. up to 5 kg loads, is preferably 2 g/µm or more, e.g. 2-20 g/µm, preferably 3 g/µm or more, when determined with the 55 µm film sample as defined above. The upper limit is not critical and can be e.g. less than 10 g/µm.

In preferred films for use in heavy weight/duty packaging applications up to e.g. 50 kg loads, said relative impact strength is preferably 2 g/µm or more, preferably 3 g/µm or more, more preferably 5 g/µm or more, and in some demanding end applications advantageously even 7 g/µm or more, when determined with the 80 µm film sample as defined above. The upper limit is not limited, but typically less than 20 g/µm.

The film of the invention preferably also has very desirable tear resistance in machine direction (MD) expressed as relative tear resistance as defined under the title "**Determination methods**" below.

In preferred films for use in light weight packaging applications e.g. up to 5 kg, the relative tear resistance (in Machine Direction) is 40 N/mm or more, preferably 50 N/mm or more when determined with the 55 µm film sample as defined above. Upper limit not limited, but may be e.g. 200 N/mm, such a 1000 N/mm.

In preferred films for use in heavy weight/duty packaging applications, the film preferably has a relative tear resistance in MD (Machine Direction) of 40 N/mm or more, preferably 60 N/mm or more, when determined with the 80 µm film sample as defined above. In demanding embodiments relative tear resistance in MD of even 80 N/mm or more, or as high as 100 N/mm or more, is preferred, when determined with the 80 µm film sample as defined above. The upper limit again is not limited, but could be e.g. 200 N/mm.

More preferably, especially in heavy weight/duty applications up to 50 kg loads, the film of the invention has also very good creep properties in machine direction, MD, according to creep determination method as defined under the title "**Determination methods**" below. Accordingly in such applications the creep resistance of preferred films in MD (%) at 23 N load, at temperature of 23C is 10 % or less, when determined with the 80 µm film sample as defined above. In demanding embodiments preferable creep resistance in MD is even 8 % or less.

The creep resistance of the films of the invention provides excellent pallet stability.

Furthermore the film of the invention has very good printability and sealability properties. The films of the invention preferably also possess a wide sealing range.

In some embodiments of the invention, particularly in heavy weight/duty applications, also stiffness of the film is preferred. Accordingly, stiffness of preferred films expressed as Tensile Modulus in the transverse direction, as measured according to the method given under **"Determination methods",** may preferably be at least 350 MPa, more preferably at least 400 MPa, still more preferably at least 450 MPa, e.g greater than 500 MPa, when determined with the 80 µm film sample as defined above.

Due to the preferable mechanical properties of the films their further processing e.g. in printing and packaging machines is excellent.

The films of the invention may therefore also be used in flexible packaging. The oriented films may, for example, be printed (e.g. flexoprinted or laminated) onto other substrates and films (e.g. films made from polyethylene, polypropylene, PET or polyacrylic acid) and the resulting films/laminates converted into bags or pouches. Any shape and/or size of bag may be prepared.

The attractive properties of the films of the invention mean they have a wide variety of applications but are of particular interest in the formation of bags and sacks. Such sacks/bags may be made in different shapes and sizes.

The invention will now be described with reference to the following nonlimiting examples.

### Determination methods

Unless otherwise stated, the film samples used for the measurements to define the above and below properties of the films were prepared as described under the heading "**Film Sample Preparation**".

**Density** of the materials is measured according to ISO 1183:1987 (E), method D, with isopropanol-water as gradient liquid. The cooling rate of the plaques when crystallising the samples was 15 C/min. Conditioning time was 16 hours.

**MFR₂, MFR₅ and MFR₂₁** measured according to ISO 1133 at 190°C at loads of 2.16, 5.0, and 21.6 kg respectively.

**Molecular weights, molecular weight distribution, Mn, Mw, MWD** Mw/Mn/MWD are measured by GPC according to the following method: The weight average molecular weight Mw and the molecular weight distribution (MWD = Mw/Mn wherein Mn is the number average molecular weight and Mw is the weight average molecular weight) is measured by a method based on ISO 16014-4:2003. A waters 150CV plus instrument was used with column 3 x HT&E styragel from Waters (divinylbenzene) and trichlorobenzene (TCB) as solvent at 140 °C. The column set was calibrated using universal calibration with narrow MWD PS standards (the Mark Howinks constant K: 9.54*10⁻⁵ and a: 0.725 for PS, and K: 3.92*10⁻⁴ and a: 0.725 for PE). Equipment: Alliance 2000 GPCV (W4410), detector: Refractive index and Visc-detector.

**Tm and Tcr** both were measured according to ISO 11357-1 on Perkin Elmer DSC-7 differential scanning calorimetry. Heating curves were taken from -10°C to 200°C at 10°C/min. Hold for 10 min at 200°C. Cooling curves were taken from 200°C to - 10°C per min. Melting and crystallization temperatures were taken as the peaks of endotherms and exotherms. The degree of crystallinity was calculated by comparison with heat of fusion of a perfectly crystalline polyethylene, i.e. 290 J/g.

**Comonomer content (mol%)** was determined based on Fourier transform infrared spectroscopy (FTIR) determination calibrated with C13-NMR.

**Impact Strength** is determined on Dart-drop (g/50%). Dart-drop is measured using ISO 7765-1, method "A". A dart with a 38 mm diameter hemispherical head is dropped from a height of 0.66 m onto a film sample clamped over a hole. If the specimen fails, the weight of the dart is reduced and if it does not fail the weight is increased. At least 20 specimens are tested. The weight resulting in failure of 50% of the specimens is calculated and this provides the dart drop impact (DDI) value (g). The relative DDI (g/µm) is then calculated by dividing the DDI by the thickness of the film.

**Tear resistance (determined as Elmendorf tear (N))**: Applies both for the measurement in machine direction and transverse direction. The tear strength is measured using the ISO 6383/2 method. The force required to propagate tearing across a film sample is measured using a pendulum device. The pendulum swings under gravity through an arc, tearing the specimen from pre-cut slit. The film sample is fixed on one side by the pendulum and on the other side by a stationary clamp. The tear resistance is the force required to tear the specimen. The relative tear resistance (N/mm) is then calculated by dividing the tear resistance by the thickness of the film.

**Creep resistance in MD (%), at 23 N load, at temperature of 23C** is determined as follows: A film sample cut in machine direction of 25mm witdh is fixed in a stationary clamp and a load of 2.3 kg is fixed to the other end of the sample with a clamp so that 100mm of film sample is left between the two clamps. The testing temperature is 23C. The free hanging load will make the film slowly yield (elongate). The film length is measured after 24 hours whereby the elongation in percent will be calculated for the sample.

**Tensile modulus** (secant modulus, 0.05-1.05%) is measured according to ASTM D 882-A on film samples prepared as described under below "**Film Sample preparation".** The speed of testing is 5mm/min. The test temperature is 23°C. Width of the film was 25 mm.

### EXAMPLES

mLLDPE 1: A unimodal mLLDPE having a MFR₂ of 1.3 g/10 min and a density of 922 kg/m³.

mLLDPE 2: A multimodal mLLDPE having a MFR₂ of 1.8 g/10 min and a density of 915 kg/m³.

znLLDPE 1: A multimodal znLLDPE having a MFR₂ of 0.3 g/10 min and a density of 946 kg/m³.

znLLDPE 2: A multimodal znLLDPE having a MFR₂ of 0.2 g/10 min and a density of 923 kg/m³.

znLLDPE 3: A multimodal znLLDPE having a MFR₂ of 0.4 g/10 min and a density of 924 kg/m³.

znLLDPE 4: A multimodal znLLDPE having a MFR₂ of 0.2 g/10 min and a density of 931 kg/m³.

EMA 1 (Elvaoy® 1125 AC, commercially available from DuPont) - A copolymer of ethylene and methyl acrylate containing 25 % methyl acrylate, MFR₂ 0.4 g/10 min, density 944 kg/m³, Tm 90 °C, Vicat softening temp A50 (10 N) = 48 °C (ISO 306). This polymer is commercially available from DuPont™

EMA 2 (Elvaoy® 1224 AC, commercially available from DuPont) - A copolymer of ethylene and methyl acrylate containing 24 % methyl acrylate, MFR₂ 2.0 g/10 min, density 944 kg/m³, Tm 91 °C, Vicat softening temp A50 (10 N) = 48 °C (ISO 306). This polymer is commercially available from DuPont™

### Preparation of Polymers

### Example 1: Polymerisation of mLLDPE 2

### Catalyst preparation example

**Complex:** The catalyst complex used in the polymerisation example was a silica supported bis(n-butyl cyclopentadienyl)hafnium dibenzyl, (n-BUCp)₂Hf(CH₂Ph)₂, and it was prepared according to "Catalyst Preparation Example 2" of WO2005/002744. The starting complex, bis(n-butyl cyclopentadienyl)hafnium dichloride, was prepared as described in "Catalyst Preparation Example 1" of said WO 2005/002744.

**Activated catalyst system:** Complex solution of 0.80 ml toluene, 38.2 mg (n-BuCp)₂Hf(CH₂Ph)₂ and 2.80 ml 30 wt% methylalumoxane in toluene (MAO, supplied by Albemarle) was prepared. Precontact time was 60 minutes. The resulting complex solution was added slowly onto 2.0 g activated silica (commercial silica carrier, XPO2485A, having an average particle size 20µm, supplier: Grace). Contact time was 2 h at 24°C. The catalyst was dried under nitrogen purge for 3 h at 50°C. The obtained catalyst had Al/Hf of 200 mol/mol; Hf 0.40 wt%.

### Polymerisation example:

The polymerisation was carried out in a continuously operated pilot polymerisation process. A prepolymerisation step in 50 dm³ loop reactor, at temperature of 60°C and pressure of 63 bar in the presence of the catalyst, ethylene, 1-butene as a comonomer and propane as diluent in amounts given in table 1 below, preceded the actual polymerisation in two stage loop-gas phase reactor system. The reaction product obtained from the prepolymerisation step was fed to the actual loop reactor having a volume of 500 dm³ and ethylene, hydrogen, 1-butene as comonomer and propane as diluent were fed in amounts that the ethylene concentration in the liquid phase of the loop reactor was 6,5 mol-%. The other amounts and ratios of the feeds are given in table 1 below. The loop reactor was operated at 85°C temperature and 60 bar pressure. The formed polymer (LMW component) had a melt index MFR₂ of 110 g/10 min at 26 kg/h.

The slurry was intermittently withdrawn from the reactor by using a settling leg and directed to a flash tank operated at a temperature of about 50°C and a pressure of about 3 bar.

From the flash tank the powder, containing a small amount of residual hydrocarbons, was transferred into a gas phase reactor operated at 80°C temperature and 20 bar pressure. Into the gas phase reactor was also introduced additional ethylene nitrogen as inert gas as well as 1-butene and 1-hexene as comonomers in such amounts that the ethylene concentration in the circulating gas was 50 mol-%. The ratio of hydrogen to ethylene, the ratio of comonomers to ethylene and the polymer production rate are given in the below table 1. The production rate was 28 kg/h. The production split between the loop and gas phase reactors was thus 50/50 wt-%.

The polymer collected from the gas phase reactor was stabilised by adding to the powder 1500ppm Irganox B215. The stabilised polymer was then extruded and pelletised under nitrogen atmosphere with CIM90P extruder, manufactured by Japan Steel Works. The melt temperature was 214 °C, throughput 221 kg/h and the specific energy input (SEI) was 260 kWh/kg.

**Table 1: Polymerisation conditions and the product properties of the obtained products of example 1**

| Polymerization conditions | Unit | Ex 1 mLLDPE 2 |
|---|---|---|
| **Prepolymerisation** | | |
| temperature | °C | 60 |
| pressure | bar | 63 |
| Catalyst feed | g/h | 33 |
| C2 feed | kg/h | 1,5 |
| C4 feed | g/h | 58 |
| | | |
| | | |
| **Loop reactor** | | |
| C2 concentration | mol-% | 6,5 |
| H2/C2 ratio | mol/kmol | 0,56 |
| C4/C2 ratio | mol/kmol | 107 |
| C6/C2 ratio | mol/kmol | - |
| MFR₂ | g/10 min. | 110 |
| Density | kg/m³ | 938 |
| Prod. rate | kg/h | 26 |
| **Gas phase reactor** | | |
| C2 concentration | mol-% | 50 |
| H2/C2 ratio | mol/kmol | 0,44 |
| C4/C2 ratio | mol/kmol | 15 |
| C6/C2 ratio (1-hexene) | mol/kmol | 19 |
| Prod. rate | kg/h | 28 |
| MFR₂ | g/10 min. | 1.9 |
| Density | kg/m³ | 914 |
| **Final product** | | |
| Prod. split loop/GPR | wt% | 50/50 |
| Irganox B215 | ppm | 1500 |
| CIM90P throughput | kg/h | 221 |
| CIM90P extruder melt temp. | °C | 214 |
| CIM90P SEI | kWh/kg | 260 |
| (specific energy input) | | |
| Pellet properties | | |
| Density of the pelletized final polymer, | kg/m³ | 915 |
| MFR₂ of the pelletized final polymer | g/10 min | 1,8 |

**Example 2: mLLPE 1** - A unimodal ethylene hexene copolymer was produced using a bis(n-butylcyclopentadienyl) hafnium dibenzyl catalyst in a slurry loop reactor at the polymerization conditions given below. For the preparation of the catalyst system, see example 1 above.

| Polymerisation conditions: | |
|---|---|
| Pressure: | 42 bar |
| C2 amount in flash gas: | 5 wt% |
| C6/C2 in flash gas: | 130 mol/kmol |
| Temperature: | 86°C |
| Residence time: | 40 to 60 minutes |

After collecting the polymer it was blended with conventional additives (stabiliser and polymer processing aid) and extruded into pellets in a counterrotating twinscrew extruder JSW CIM90P. The obtained unimodal mLLDPE polymer (polymer 3) had the density of 922 kg/m³ and MFR₂ of 1.3 g/10min.

### Examples 3-6:

### Example 3: znLLDPE 1

Multimodal znLLDPE polymer was prepared in a pilot scale multistage reactor system containing a loop reactor and a gas phase reactor. A prepolymerisation step preceded the actual polymerisation step. The prepolymerisation stage was carried out in slurry in a 50 dm³ loop reactor at about 80 °C in a pressure of about 65 bar using the polymerisation catalyst prepared according to Example 1 of WO 2004/000902 and triethylaluminium as the cocatalyst. The molar ratio of aluminium of the cocatalyst to titanium of the catalyst was about 20..Ethylene was fed in a ratio of (200g of C2)/(1g/catalyst). Propane was used as the diluent and hydrogen was fed in amount to adjust the MFR₂ of the prepolymer to about 10 g/10 min. The obtained slurry together with prepolymerised catalyst and triethyl aluminium cocatalyst were transferred to the actual polymerisation step, i.e.introduced into a 500 dm³ loop reactor, wherein a continuous feed of propane, ethylene and hydrogen was also introduced. The ratio of H2/C2 in the reaction mixture was 395 mol/kmol. The loop reactor was operated at 95 °C temperature and 60 bar pressure. The process conditions were adjusted as shown in Table 2 to form polymer having an MFR₂ of 400 g/10 min and a density of about 972 kg/m³ at a production rate of about 30 kg/h.

The slurry was then transferred to a fluidised bed gas phase reactor, where also additional ethylene, 1-butene comonomer and hydrogen were added, together with nitrogen as an inert gas to produce the HMW component in the presence of the LMW component. The ratio of H2/C2 in the recycle gas was 48 mol/kmol and the ratio of C4/C2 was 70 mol/kmol. The gas phase reactor was operated at a temperature of 80 °C and a pressure of 20 bar. The production rate of the polymer was about 75 kg/h. The split (wt%) loop/gas phase was 43/57. The polymer obtained from the gas phase reactor had MFR₂ of 0.25 g/10 min and a density of about 945 kg/m³.

The reactor powder was then stabilised with conventional additives and pelletized in a known manner using CIM90P counter-rotating twin screw extruder manufactured by Japan Steel Works. The product properties of the pelletized final polymers are given in table 2 below.

**Example 4**: znLLDPE 2, **Example 5**: znLLDPE 3 and **Example 6**: znLLDPE 4 were prepared according to the method described for znLLDPE 1, except the reaction conditions were adjusted in a known manner to provide polymers with desired properties. The polymerisation conditions and polymer properties are given in table 2 below. In case of znLLDPE 2 and znLLDPE 3 comonomer, 1-butene, was added to the loop reactor in amounts as given in table 2 for producing LMW ethylene copolymer.

**Table 2: Polymerisation conditions and the product properties of the obtained products of example 3-6**

| **Polymer** | Ex 3. znLLDPE 1 | Ex. 4 znLLDPE 2 | Ex. 5 znLLDPE 3 | Ex. 6 znLLDPE 4 |
|---|---|---|---|---|
| Ethylene concentration in loop reactor, mol-% | 6.7 | 6.7 | 6.4 | 6.8 |
| Hydrogen to ethylene ratio in loop reactor, mol/kmol | 395 | 240 | 235 | 350 |
| 1-butene to ethylene mole ratio in loop reactor, mol/kmol | - | 570 | 730 | - |
| Polymer production rate in loop reactor, kg/h | 30 | 30 | 28 | 30 |
| MFR₂ of polymer produced in loop reactor, g/10 min | 400 | 300 | 300 | 300 |
| Density of polymer produced in loop reactor, kg/m³ | 972 | 951 | 946 | 972 |
| Ethylene concentration in gas phase reactor, mol-% | 19 | 19 | 20 | 22 |
| Hydrogen to ethylene ratio in gas phase reactor, mol/kmol | 48 | 7 | 4 | 8 |
| 1-butene to ethylene mole ratio in gas phase reactor, mol/kmol | 70 | 460 | 580 | 450 |
| Polymer production rate in gpr, kg/h | 75 | 75 | 75 | 75 |
| Split, loop/gpr | 43/57 | 41/59 | 48/52 | 41/59 |
| MFR₂ of the pelletized final polymer, g/10 min | 0.3 | 0.2 | 0.4 | 0.2 |
| Density of the pelletized final polymer, kg/m³ | 946 | 923 | 924 | 931 |

### Film Sample Preparation

Films having an ABC-structure were coextruded on a 3-layer Windmöller&Hölscher Varex coextrusion line with die diameter 200mm, at a blow up ratio (BUR) of 1:3, frost line height 600 mm and Die gap 1.2 mm. The temperature settings on the three extruders were A=210°C / B=210°C / C=170°C and the temperature setting on the extruder die was 200°C. The formed films have thicknesses as shown in Table 3 and the composition of each of the films is also presented in Table 3.

Stretching and lamination was carried out using a monodirectional stretching machine manufactured by Hosokawa Alpine AG in Augsburg/Germany. The film obtained from blown film extrusion was pulled into the orientation machine and heated by passing it over several heating rollers. These rollers have a temperature of 110-120 °C and cause the inner C-layer(s) to melt and fully laminate the two films together and furthermore enable the film to be easily stretched. After passing the heating rollers the film has reached a homogenous temperature. The film is then stretched between two sets of nip rollers where the second pair runs at higher speed than the first pair resulting in the desired draw ratio. Stretching is carried out with the draw ratios presented in Table 3. After stretching the uniaxially oriented film was tempered to anneal by passing over a set of annealing rollers where the speed was reduced which results in a relaxation of the film stresses. At last the film was cooled by passing over chilled cooling rollers. After exiting the stretching machine the film is fed into a conventional film winder where the film is slit to its desired width and wound to form reels.

The mechanical properties of the films are shown in Table 4.

As to the film samples used in the determinations of general film properties as defined above in the description part:
- The film samples ABCCBA used for determining the general film properties for heavy weight/duty applications up to e.g. 50 kg loads were prepared as described above and had ABC thickness before lamination of 240 µm, starting thickness of ABCCBA before stretching of 480 µm, draw ratio of 1:6, final thickness of 80 µm after stretching and a thickness distribution (%) of 20/22.5/7.5/7.5/22.5/20 of the total film thickness.
- The film samples ABCCBA used for determining the film properties for said light weight applications up to e.g. 5 kg loads were prepared as described above and had ABC thickness before lamination of 165 µm, starting thickness of ABCCBA before stretching of 330 µm, draw ratio of 1:6, the final thickness of 55 µm after stretching and thickness distribution (%) of 15/27.5/7.5/7.5/27.5/15

**Table 3**

| Film | Composition | | | | | | | |
|---|---|---|---|---|---|---|---|---|
| No. | Layer (A) | Layer (B) | Layer (C) | Layer thickness distribution (%) | Initial film thickness (µm) | Laminated Structure | Draw Ratio | Final film thickness (µm) |
| 1 | 70 % znLLDPE 2 | 100 % znLLDPE 2 | 100 % EMA 1 | 40/45/15 | 240 | ABCCBA | 1:6.3 | 77 |
| | 30% mLLDPE 2 | | | | | | | |
| 2 | 70 % znLLDPE 2 | 100 % znLLDPE 2 | 100 % EMA 1 | 30/55/15 | 180 | ABCCBA | 1:6.3 | 57 |
| | 30% mLLDPE 2 | | | | | | | |
| 3* | 100 % znLLDPE 2 | 100 % znLLDPE 4 | 100 % EMA 2 | 40/45/15 | 240 | ABCCBA | 1:6 | 80 |
| 4 | 50 % znLLDPE 2 | 100 % znLLDPE 4 | 100 % EMA 2 | 40/45/15 | 240 | ABCCBA | 1:6 | 83 |
| | 50% mLLDPE 1 | | | | | | | |
| 5* | 100 % znLLDPE 2 | 100 % znLLDPE 4 | 100 % EMA 2 | 40/45/15 | 255 | ABCCBA | 1:5.8 | 86 |
| 6* | 100 % znLLDPE 2 | 100 % znLLDPE 4 | 100 % EMA 2 | 40/40/20 | 275 | ABCCBA | 1:5.9 | 93 |

| | | | | | | | | |
|---|---|---|---|---|---|---|---|---|
| * Comparative films | | | | | | | | |

**Table 4: Film properties of the film examples**

| Property | HDSS specification# | Film 1 | Film 2 | Film 3 | Film 4 | Film 5 | Film 6 | CE1* |
|---|---|---|---|---|---|---|---|---|
| Thickness (µm) | 130 | 77 | 57 | 80 | 83 | 86 | 93 | 132 |
| Dart Drop Impact (DDI) (g) | 550 | 920 | | 860 | 590 | 950 | 980 | 700 |
| **Relative DDI (g/µm)** | **4.2** | **11.9** | | **10.8** | **7.1** | **11.0** | **10.5** | **5.3** |
| Tear Resistance/MD (N) | 8 | 9.2 | 2.9 | 7.5 | 7.8 | 10.2 | 13.9 | 11 |
| **Relative Tear Resistance/MD (N/mm)** | **61.5** | **119.5** | **50.9** | **93.8** | **94.0** | **118.6** | **159.5** | **83.3** |
| Creep MD/23N/23°C (%) | 10 | | | 7 | 5 | 7.2 | 7.8 | |

| | | | | | | | | |
|---|---|---|---|---|---|---|---|---|
| * Comparative example was commercially available packaging film for heavy duty applications, not stretched, and comprised 50 wt% of a unimodal LLDPE, MFR₂ of 1.3 g/10 min and density of 927 kg/m³ and 50 wt% of a bimodal znLLDPE , MFR₂ of 0.2 g/10 min and density of 931 kg/m³. #HDSS specification lists typical demands given in the state of art for the film properties needed in heavy duty shipping sacks. | | | | | | | | |

Further mechanical properties of Film 4 were determined and the results are shown in the Table 5 below.

**Table 5**

| | HDSS property specification | CE1* | Film 4 of the invention |
|---|---|---|---|
| Film thickness (µm) | 80±5 | 132 | 83 |
| **Tensile modulus** (Stiffness)/TD (MPa) | >250 | 310 | 520 (MD 480) |

## Claims

1. A uniaxially oriented multilayer film comprising layers in the following order:
(i) a first outer layer (A), comprising a mixture of multimodal znLLDPE and mLLDPE, which mLLDPE is a unimodal or multimodal mLLDPE,
(ii) a second outer layer (B) comprising a multimodal linear low density polyethylene (LLDPE); and
(iii) a first inner layer (C) comprising at least one polymer component which has a Tm ≤ 100 °C;
(iv) a second inner layer (C);
(v) a third outer layer (B); and
(vi) a fourth outer layer (A) comprising a mixture of multimodal znLLDPE and mLLDPE, which mLLDPE is a unimodal or multimodal mLLDPE;
wherein said multilayer film is in the form of a stretched film which is uniaxially oriented in the machine direction (MD) in a draw ratio of at least 1:3; and
wherein layers (B) (ii) and (B) (v) and/or layers (C) (iii) and (C) (iv) comprise the same or different polymer composition(s).

2. A film as claimed in claim 1 in the form of a laminated multilayer film which comprises
(i) a first outer layer (A) comprising a mixture of multimodal znLLDPE and mLLDPE, which mLLDPE is a unimodal or multimodal mLLDPE,
(ii) a second outer layer (B) comprising a multimodal linear low density polyethylene (LLDPE); and
(iii) a first inner layer (C) comprising at least one polymer component which has a Tm ≤ 100 °C; in the form of a coextruded multilayer film as a multilayer film laminate (a); and
(iv) a second inner layer (C);
(v) a third outer layer (B); and
(vi) a fourth outer layer (A) comprising a mixture of multimodal znLLDPE and mLLDPE, which mLLDPE is a unimodal or multimodal mLLDPE;
in the form of a coextruded multilayer film as a substrate (b);
wherein said first inner layer (C) of said film laminate (a) is in contact with the second inner layer (C) of the substrate (b) and said coextruded laminate (a) and coextruded multilayer substrate (b) are laminated together and wherein said laminated multilayer film is uniaxially oriented in the machine direction (MD) in a draw ratio of at least 1:3.

3. A film as claimed in claim 2 wherein substrate (b) comprises a second inner layer (C) comprising at least one polymer component which has a Tm ≤ 100 °C.

4. A film as claimed in any preceding claim in the form of a stretched film which is uniaxially oriented in the MD in a draw ratio of 1:3 to 1:10.

5. A film as claimed in claim 1 to 4 wherein at least inner layers (C) (iii) and (C) (iv) comprise the same polymer composition.

6. A film as claimed in any preceding claim, wherein layer (B) comprises multimodal LLDPE produced using a Ziegler Natta catalyst (znLLDPE).

7. A film as claimed in any preceding claim, wherein layer (C) comprises at least one ethylene acrylate copolymer.

8. A film as claimed in any preceding claim, wherein layer (C) comprises an ethylene alkyl acrylate, preferably ethylene methyl acrylate (EMA).

9. A film as claimed in any preceding claim having a thickness of less than 140 µm.

10. A process for the preparation of a laminated multilayer film as claimed in claims 2 to 9 comprising:
- coextruding a composition so as to form a coextrudate film laminate (a) having:
(i) a first outer layer (A) comprising a mixture of multimodal znLLDPE and mLLDPE, which mLLDPE is a unimodal or multimodal mLLDPE;
(ii) a second outer layer (B) comprising a multimodal linear low density polyethylene (LLDPE); and
(iii) a first inner layer (C) comprising at least one polymer component which has a Tm ≤ 100 °C;
- coextruding a composition so as to form a ooextrudate substrate (b) (CBA) having:
(iv) a second inner layer (C);
(v) a third outer layer (B); and
(vi) a fourth outer layer (A) comprising a mixture of multimodal znLLDPE and mLLDPE, which mLLDPE is a unimodal or multimodal mLLDPE;
- contacting said coextrudate film laminate ABC (a) on the surface of said coextrudate substrate (CBA) (b) in that layer order,
- laminating said ABCCBA structure together; and
- stretching the laminated film uniaxially in machine direction (MD) in a draw ratio of at least 1:3.

11. A process as claimed in claim 10, wherein said stretching provides a draw ratio of 1:3 to 1:10, preferably 1:5 to 1:8.

12. A process as claimed in claim 10, wherein lamination is carried out at the same time as stretching.

13. Use of a film as claimed in any one of claims 1 to 9 in packaging, preferably in light weight or heavy weight packaging capable of containing loads of up to 5 kg and 50 kg respectively.

14. An article comprising a film as claimed in any one of claims 1 to 9.

15. An article as claimed in claim 14 which is a packaging article, preferably a sack or bag.

## Patentansprüche

1. Uniaxial orientierte mehrschichtige Folie, die Schichten in der folgenden Reihenfolge aufweist:
(i) eine erste äußere Schicht (A), die ein Gemisch aus multimodalem znLLDPE und mLLDPE aufweist, wobei das mLLDPE ein unimodales oder multimodales mLLDPE ist,
(ii) eine zweite äußere Schicht (B), die ein multimodales lineares Polyethylen niedriger Dichte (LLDPE) aufweist; und
(iii) eine erste innere Schicht (C), die zumindest eine Polymerkomponente aufweist, die Tm ≤ 100°C hat;
(iv) eine zweite innere Schicht (C);
(v) eine dritte äußere Schicht (B); und
(vi) eine vierte äußere Schicht (A), die ein Gemisch von multimodalem znLLDPE und mLLDPE aufweist, wobei das mLLDPE ein unimodales oder multimodales mLLDPE ist;
wobei die mehrschichtige Folie in Form einer gereckten Folie vorliegt, die in Maschinenrichtung (MD) bei einem Reckverhältnis von mindestens 1:3 uniaxial orientiert ist; und
wobei die Schichten (B) (ii) und (B) (v) und/oder die Schichten (C) (iii) und (C) (iv) die gleiche oder unterschiedliche Polymerzusammensetzungen aufweisen.

2. Folie nach Anspruch 1 in Form einer laminierten mehrschichtigen Folie, welche umfaßt:
(i) eine erste äußere Schicht (A), die ein Gemisch aus multimodalem znLLDPE und mLLDPE aufweist, wobei das mLLDPE ein unimodales oder multimodales mLLDPE ist,
(ii) eine zweite äußere Schicht (B), die ein multimodales lineares Polyethylen niedriger Dichte (LLDPE) aufweist; und
(iii) eine erste innere Schicht (C), die zumindest eine Polymerkomponente aufweist, die Tm ≤ 100°C hat, in Form einer coextrudierten mehrschichtigen Folie als mehrschichtiges Folienlaminat (a); und
(iv) eine zweite innere Schicht (C);
(v) eine dritte äußere Schicht (B); und
(vi) eine vierte äußere Schicht (A), die ein Gemisch von multimodalem znLLDPE und mLLDPE aufweist, wobei das mLLDPE ein unimodales oder multimodales mLLDPE ist, in Form einer coextrudierten mehrschichtigen Folie als Substrat (b);
wobei die erste innere Schicht (C) des Folienlaminats (a) mit der zweiten inneren Schicht (C) des Substrat (b) in Kontakt steht und das coextrudierte Laminat (a) und das coextrudierte mehrschichtige Substrat (b) zusammen laminiert sind und wobei die laminierte mehrschichtige Folie bei einem Reckverhältnis von mindestens 1:3 in Maschinenrichtung (MD) uniaxial orientiert ist.

3. Folie nach Anspruch 2, wobei das Substrat (b) eine zweite innere Schicht (C) aufweist, die zumindest eine Polymerkomponente umfaßt, die Tm ≤ 100°C hat.

4. Folie nach einem der vorstehenden Ansprüche in Form einer gereckten Folie, die bei einem Reckverhältnis von 1:3 bis 1:10 in MD uniaxial orientiert ist.

5. Folie nach den Ansprüchen 1 bis 4, wobei zumindest die inneren Schichten (C) (iii) und (C) (iv) die gleiche Polymerzusammensetzung aufweisen.

6. Folie nach einem der vorstehenden Ansprüche, wobei die Schicht (B) multimodales LLDPE aufweist, das unter Verwendung eines Ziegler-Natta-Katalysators erzeugt worden ist (znLLDPE).

7. Folie nach einem der vorstehenden Ansprüche, wobei die Schicht (C) zumindest ein Ethylen-Acrylat-Copolymer aufweist.

8. Folie nach einem der vorstehenden Ansprüche, wobei die Schicht (C) ein Ethylen-Alkylacrylat, vorzugsweise Ethylen-Methylacrylat (EMA) aufweist.

9. Folie nach einem der vorstehenden Ansprüche, die eine Dicke von weniger als 140 µm aufweist.

10. Verfahren zum Herstellen einer laminierten mehrschichtigen Folie nach den Ansprüchen 2 bis 9, das folgendes aufweist:
- Coextrudieren einer Zusammensetzung, um ein coextrudiertes Folienlaminat (a) zu erzeugen, das folgendes aufweist:
(i) eine erste äußere Schicht (A), die ein Gemisch von multimodalem znLLDPE und mLLDPE aufweist, wobei das mLLDPE ein unimodales oder multimodales mLLDPE ist,
(ii) eine zweite äußere Schicht (B), die ein multimodales lineares Polyethylen niedriger Dichte (LLDPE) aufweist; und
(iii) eine erste innere Schicht (C), die zumindest eine Polymerkomponente aufweist, die Tm ≤ 100°C hat;
- Coextrudieren einer Zusammensetzung, um ein coextrudiertes Substrat (b) (CBA) zu erzeugen, das folgendes aufweist:
(iv) eine zweite innere Schicht (C);
(v) eine dritte äußere Schicht (B); und
(vi) eine vierte äußere Schicht (A), die ein Gemisch von multimodalem znLLDPE und mLLDPE aufweist, wobei das mLLDPE ein unimodales oder multimodales mLLDPE ist;
- Inkontaktbringen des coextrudierten Folienlaminats ABC (a) auf der Oberfläche des coextrudierten Substrats (CBA) (b) in dieser Reihenfolge der Schichten,
- Laminieren der Struktur ABCCBA miteinander; und
- uniaxiales Recken der laminierten Folie in Maschinenrichtung (MD) bei einem Reckverhältnis von mindestens 1:3.

11. Verfahren nach Anspruch 10, wobei das Recken für ein Reckverhältnis von 1:3 bis 1:10, vorzugsweise 1:5 bis 1:8 sorgt.

12. Verfahren nach Anspruch 10, wobei das Laminieren gleichzeitig mit dem Recken erfolgt.

13. Verwendung einer Folie nach einem der Ansprüche 1 bis 9 bei einer Verpackung, vorzugsweise einer Verpackung für ein geringes Gewicht oder ein hohes Gewicht, die Lasten von bis zu 5 kg bzw. 50 kg aufnehmen kann.

14. Gegenstand, der eine Folie nach einem der Ansprüche 1 bis 9 umfaßt.

15. Gegenstand nach Anspruch 14, der ein Verpackungsgegenstand, vorzugsweise ein Sack oder Beutel ist.

## Revendications

1. Film multicouche uniaxialement orienté comprenant des couches dans l'ordre suivant :
(i) une première couche externe (A), comprenant un mélange de znLLDPE multimodal et mLLDPE, lequel mLLDPE est un mLLDPE unimodal ou multimodal,
(ii) une deuxième couche externe (B) comprenant un polyéthylène basse densité linéaire multimodal (LLDPE) ; et
(iii) une première couche interne (C) comprenant au moins un composant polymère qui a une Tm ≤ 100 °C ;
(iv) une deuxième couche interne (C) ;
(v) une troisième couche externe (B) ; et
(vi) une quatrième couche externe (A) comprenant un mélange de znLLDPE multimodal et mLLDPE, lequel mLLDPE est un mLLDPE unimodal ou multimodal ;
dans lequel ledit film multicouche se présente sous la forme d'un film étiré qui est uniaxialement orienté dans la direction machine (MD) à un rapport d'étirage d'au moins 1 : 3 ; et
dans lequel les couches (B)(ii) et (B)(v) et/ou les couches (C)(iii) et (C)(iv) comprennent une ou des compositions de polymère identiques ou différentes.

2. Film selon la revendication 1, sous la forme d'un film multicouche stratifié qui comprend
(i) une première couche externe (A), comprenant un mélange de znLLDPE multimodal et mLLDPE, lequel mLLDPE est un mLLDPE unimodal ou multimodal,
(ii) une deuxième couche externe (B) comprenant un polyéthylène basse densité linéaire multimodal (LLDPE) ; et
(iii) une première couche interne (C) comprenant au moins un composant polymère qui a une Tm ≤ 100 °C ; sous la forme d'un film multicouche coextrudé en tant que stratifié de film multicouche (a) ; et
(iv) une deuxième couche interne (C) ;
(v) une troisième couche externe (B) ; et
(vi) une quatrième couche externe (A) comprenant un mélange de znLLDPE multimodal et mLLDPE, lequel mLLDPE est un mLLDPE unimodal ou multimodal ;
sous la forme d'un film multicouche coextrudé en tant que substrat (b) ;
dans lequel ladite première couche interne (C) dudit stratifié de film (a) est en contact avec la deuxième couche interne (C) du substrat (b) et ledit stratifié coextrudé (a) et le substrat multicouche coextrudé (b) sont stratifiés ensemble et dans lequel ledit film multicouche stratifié est uniaxialement orienté dans la direction machine (MD) à un rapport d'étirage d'au moins 1 : 3.

3. Film selon la revendication 2, dans lequel le substrat (b) comprend une deuxième couche interne (C) comprenant au moins un composant polymère qui a une Tm ≤ 100 °C.

4. Film selon l'une quelconque des revendications précédentes, sous la forme d'un film étiré qui est uniaxialement orienté dans la MD à un rapport d'étirage de 1 : 3 à 1 : 10.

5. Film selon les revendications 1 à 4, dans lequel au moins les couches internes (C)(iii) et (C)(iv) comprennent la même composition de polymère.

6. Film selon l'une quelconque des revendications précédentes, dans lequel la couche (B) comprend du LLDPE multimodal produit en utilisant un catalyseur de Ziegler-Natta (ZnLLDPE).

7. Film selon l'une quelconque des revendications précédentes, dans lequel la couche (C) comprend au moins un copolymère d'éthylène-acrylate.

8. Film selon l'une quelconque des revendications précédentes, dans lequel la couche (C) comprend un éthylène-acrylate d'alkyle, de préférence un éthylène-acrylate de méthyle (EMA).

9. Film selon l'une quelconque des revendications précédentes, ayant une épaisseur de moins de 140 µm.

10. Procédé de préparation d'un film multicouche stratifié tel que revendiqué dans les revendications 2 à 9, comprenant les étapes consistant à :
- coextruder une composition de façon à former un stratifié de film coextrudé (A) comportant :
(i) une première couche externe (A), comprenant un mélange de znLLDPE multimodal et mLLDPE, lequel mLLDPE est un mLLDPE unimodal ou multimodal,
(ii) une deuxième couche externe (B) comprenant un polyéthylène basse densité linéaire multimodal (LLDPE) ; et
(iii) une première couche interne (C) comprenant au moins un composant polymère qui a une Tm ≤ 100 °C ;
- coextruder une composition de façon à former un substrat coextrudé (B) (CBA) comportant ;
(iv) une deuxième couche interne (C) ;
(v) une troisième couche externe (B) ; et
(vi) une quatrième couche externe (A) comprenant un mélange de znLLDPE multimodal et mLLDPE, lequel mLLDPE est un mLLDPE unimodal ou multimodal ;
- mettre en contact ledit stratifié de film coextrudé ABC (a) sur la surface dudit substrat coextrudé (CBA) (b) dans cet ordre de couche,
- stratifier ladite structure ABCCBA ensemble ; et
- étirer le film stratifié uniaxialement dans une direction machine (MD) à un rapport d'étirage d'au moins 1 : 3.

11. Procédé selon la revendication 10, dans lequel ledit étirage fournit un rapport d'étirage de 1 : 3 à 1 : 10, de préférence de 1 : 5 à 1 : 8.

12. Procédé selon la revendication 10, dans lequel une stratification est réalisée en même temps que l'étirage.

13. Utilisation d'un film tel que revendiqué dans l'une quelconque des revendications 1 à 9, en emballage, de préférence en emballage de poids léger ou de poids lourd capable de contenir des charges allant jusqu'à 5 kg et 50 kg respectivement.

14. Article comprenant un film tel que revendiqué dans l'une quelconque des revendications 1 à 9.

15. Article selon la revendication 14, qui est un article d'emballage, de préférence un sachet ou un sac.
